# EUROPEAN PATENT SPECIFICATION

(11) **EP 2 574 705 B1**
(45) Date of publication and mention of the grant of the patent: **26.08.2015**
(21) Application number: 11183465.1
(22) Date of filing: 30.09.2011
(51) Int. Cl.: F03D 11/04, E04C 5/07, E04H 12/12

(54) **Wind turbine tower**
Windturbinen-Turm
Tour d'éolienne

(43) Date of publication of application: 03.04.2013
(73) Proprietor: Siemens Aktiengesellschaft, 80333 München (DE)
(72) Inventor: Schibsbye, Karsten, 7000 Fredericia (DK)

(56) References cited:
- EP-A1- 2 253 782
- CH-A5- 691 608
- US-A1- 2008 184 654
- US-A1- 2008 313 972
- US-A1- 2009 025 304
- US-A1- 2009 307 998

## Description

The present invention relates to a wind turbine tower.

Wind turbine towers, especially tubular steel towers for large wind turbines, are large in diameter and weight. This may cause difficulties concerning the transportation of a tower to the wind farm and the used infrastructure.

Slip forming for construction is a method of continuously pouring concrete into a form of mould that moves up vertically, normally with the assistance of hydraulic or screw jacks. As the forming of the structure progress, the section of previously poured concrete hardens and forms a kind of support wall that is strong enough to withstand the concrete poured over the top of it. Pouring continues until the desired height of the structure is reached, allowing for a type of concrete structure that is positioned on top of a foundation and completely hollow inside. US 4,314,798 illustrate such a slip forming system.

The slip forming process is known in the art as being used to build wind turbine towers.

The casted concrete structure may comprise solid iron or stainless steel bars or grids for reinforcement.

It is also known to use fibers as reinforcement of concrete in wind turbine towers. US2009/0307998 is one such example. The Fiber Reinforced Concrete (FRC) is a technology which can be used together with different types of fibers such as plastics, metal, glass etc. Normally chopped fibers are mixed with the concrete to enhance the tensile properties.

In EP2253782 the slip forming process is presented as known method and a wind turbine tower comprising fibre reinforced concrete is disclosed.

In CH691608 long fibre rovings are used to reinforce posts and masts.

It is an objective of the present invention to provide a wind turbine tower with prolonged lifetime and reduced costs.

This objective is solved by a wind turbine tower as claimed in the independent claims.

The depending claims define further developments of the invention.

The technical problem which is solved by the present invention may be regarded as the provision of an advantageous concrete wind turbine tower with lower weight and same strength as known concrete wind turbine towers.

The present invention relates to a reinforced concrete wind turbine tower produced in a slip forming process or slip moulding process, characterised in that the wind turbine tower comprises comprising fibre rovings as reinforcement embedded in the concrete during the slip forming process.

Preferably, the fibre rovings are glass fibre rovings, aramid fibre rovings and/or carbon fibre rovings.

A glass fiber roving is a bundle of multiple parallel oriented glass fibers its shape being similair to a thin rope.

Preferably the carbon fibre diameter is in the range of 5µm to 10µm, and/or the number of carbon fibres in the roving is between 5000 and 30000, and/or the glass fibre diameter is in the range between 10µm and 30µm, and/or the number of glass fibres in the roving is between 500 and 2000, and/or the fibre roving weight is between 0,20 and 30 kg/km.

The fibre rovings are anchored in the concrete already at the bottom of the tower and it ends at the top of the tower.

Preferably, some of the fibre rovings will be "winded" around the tower, e.g. in an ± 25 deg. angle relative to the longitudinal (vertical) axis of the tower.

Preferably, some of the fibre rovings will be embedded in e.g. 85 deg. angle relative to the longitudinal axis so that they basically follow the circumference of the tower.

Preferably, the rovings may also be placed in the concrete in a 0 deg. angle relative to the longitudinal axis of the tower.

At the top of the tower, where the tower has to adapt to either a yaw-construction or to some transition piece between the tower and the yaw-construction, fibre rovings may be preferably placed in other paths in order to cope with the intensive tensions and stresses which act on this part of the tower.

Preferably, the rovings or fibre rovings are "pre-tensioned" when placed in the concrete during the slip moulding process in order not to create any wrinkles on the rovings or in order to strengthen the tower.

Preferably, the fibre rovings can be embedded as a supplement to conventional iron bar reinforcement or the conventional iron bar reinforcement can be embedded as a supplement to fibre rovings.

It is advantageous that fibre rovings are lighter than the corresponding iron bars and thereby the whole tower construction will become lighter than conventional.

It is furthermore advantageous in that (glass) fiber rovings do not corrode and thereby the properties of the tower will maintain during the lifetime. Furthermore the lifetime is prolonged.

Furthermore, it is advantageous in that glass fibers have higher tensile strength than steel or iron and are even cheaper.

An even further advantage is that rovings are flexible and can be delivered on drums in desired lengths and they are thereby very easy to handle - especially compared to conventional reinforcement steel rods which are solid, unflexible and difficult to handle.

Advantageously, wind turbine towers with fibre reinforced concrete can achieve a height of 120 m and more.

Further features, properties and advantages of the present invention will become clear from the following description of embodiments in conjunction with the accompanying drawings.

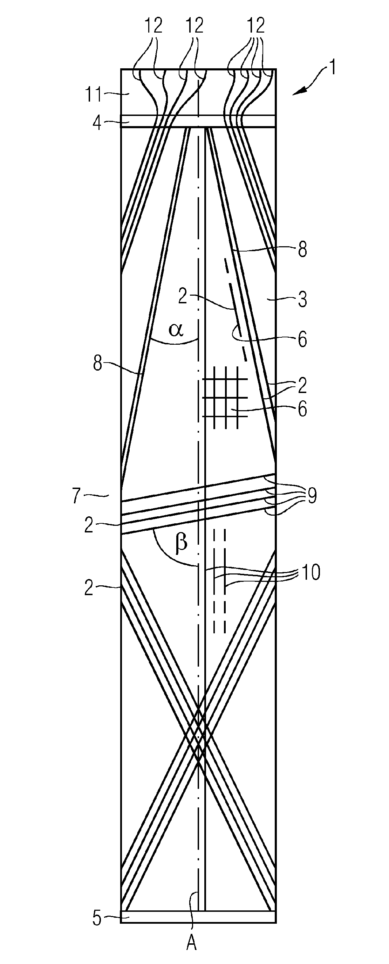

- Figure 1 :: shows a schematical side view of a wind turbine tower with of the positions and directions in which the fibre rovings will be positioned

Figure 1 shows a schematical side view of a wind turbine tower 1 made of reinforced concrete 3.

The reinforced concrete 3 of the a wind turbine tower 1 has as reinforcements fibre rovings 2,8,9,10 as reinforcements. In figure 1, the fibre rovings 2,8,9,10 are shown in different positions and directions in which the fibre rovings fibre rovings 2,8,9,10 can be positioned. The different positions and directions of the fibre rovings 2,8,9,10 are shown as example and can be combined deliberately to create different optimized embodiments of the wind turbine tower 1. Alternatevely, only one position and/or direction of the shown fibre rovings 2,8,9,10 can be chosen for the whole wind turbine tower 1.

The fibre rovings 2,8,9,10 are preferably glass fibre rovings 2, but can also consist of carbon fibre rovings 2,8,9,10. A fibre roving 2,8,9,10 is a bundle of multiple parallel oriented fibers with around 200 fibers forming a thin rope.

The tower 1 is produced in a slip forming process or slip moulding process. Slip forming for construction is a method of continuously pouring concrete into a form of mould that moves up vertically, normally with the assistance of hydraulic or screw jacks. As the forming of the tower structure progress, the section of previously poured concrete hardens and forms a kind of support wall that is strong enough to withstand the concrete poured over the top of it. Pouring continues until the desired height of the structure is reached, allowing for a type of concrete structure that is positioned on top of a foundation and completely hollow inside. The fibre rovings 2,8,9,10 will be embedded in the concrete 3 during the slip forming process.

The fibre rovings 2,8,9,10 can be anchored in the concrete 3 at the bottom 5 and at the top 4 of the wind turbine tower 1.

Some fibre rovings 2,8,9,10 are winded around the wind turbine tower 1 in a given angle α, β relative to the longitudinal (vertical) axis A of the wind turbine tower 1

Some fibre rovings 8 are in an angle of α= ± 25 degree.

Some fibre rovings are in an angle of β= ± 85 degree so that they basically follow the circumference of the tower wind turbine tower 1.

Some fibre rovings 10 are placed in the concrete 3 in a zero degree angle relative to the longitudinal axis A of the tower 1 preferably under pretension.

At the top 4 of the wind turbine tower 1, the tower 1 adapts to either a yaw-construction or to some transition piece 11 between the tower 1 and the yaw-construction 11.

The fibre rovings 12 are placed in paths in order to cope with the intensive tensions and stresses which act on this part of the tower 1.

The fibre rovings 2,8,9,10 are pre-tensioned when placed in the concrete 3 during the slip moulding process in order not to create any wrinkles on the rovings or in order to stabilise the tower 1.

The fibre rovings 2,8,9,10 can be embedded as a supplement to conventional iron bar reinforcement 6 or the conventional iron bar reinforcement 6 can be embedded as a supplement to the fibre rovings 2.

## Claims

1. Wind turbine tower (1) comprising reinforced concrete (3) and produced in a slip forming process or slip moulding process,
**characterised in that**
the wind turbine tower (1) comprises fibre rovings (2,8,9,10) as reinforcements embedded in the concrete (3) during the slip forming or slip moulding process and **in that**
the fibre rovings (2,8,9,10) are anchored in the concrete (3) already at the bottom (5) of the wind turbine tower (1) and it ends at the top (4) of the wind turbine tower (1).

2. Wind turbine tower according to claim 1,
**characterised in that**
the fibre rovings (2,8,9,10) are glass fibre rovings (2,8,9,10), aramid fibre rovings (2,8,9,10) and/or carbon fibre rovings (2,8,9,10).

3. Wind turbine tower according to claim 1 or 2,
**characterised in that**
the fibre rovings (2,8,9,10) is a bundle of multiple parallel oriented fibers.

4. Wind turbine tower according to claim 3,
**characterised in that**
- the carbon fibre diameter is in the range of 5µm to 10µm, and/or
- the number of carbon fibres in the roving is between 5000 and 30000, and/or
- the glass fibre diameter is in the range between 10µm and 30µm, and/or
- the number of glass fibres in the roving is between 500 and 2000, and/or
- the fibre roving weight is between 0,20 and 30 kg/km.

5. . Wind turbine tower according to one of the preceding claims,
**characterised in that**
some fibre rovings (2,8,9,10) are wound around the wind turbine tower (1) in a given angle (α) relative to the longitudinal (vertical) axis (A) of the tower (1), preferably in an angle of ± 25 degree.

6. . Wind turbine tower according to one of the preceding claims,
**characterised in that**
some fibre rovings (9) are wound around the wind turbine tower (1) in a given angle (α) relative to the longitudinal (vertical) axis (A) of the tower (1), preferably in an angle (β) of ± 85 degree so that they basically follow the circumference of the tower (1).

7. Wind turbine tower according to one of the preceding claims,
**characterised in that**
some fibre rovings (10) are placed in the concrete (3) in a zero degree angle relative to the longitudinal axis (A) of the tower (1).

8. . Wind turbine tower according to one of the preceding claims,
**characterised in that**
- at the top (4) of the tower (1), the tower adapts to either a yaw-construction or to some transition piece between the tower (1) and the yaw-construction,
fibre rovings (2,8,9,10) are placed in paths in order to cope with the intensive tensions and stresses which act on this part of the tower (1)

9. Wind turbine tower according to one of the preceding claims,
**characterised in that**
the fibre rovings (2,8,9,10) are pre-tensioned when placed in the concrete (3) during the slip moulding process in order not to create any wrinkles on the fibre rovings (2,8,9,10) or to stabilise the tower (1).

10. . Wind turbine tower according to one of the preceding claims,
**characterised in that**
the fibre rovings (2,8,9,10) can be embedded as a supplement to conventional iron bar reinforcement (6) or the conventional iron bar reinforcement (6) can be embedded as a supplement to the fibre rovings (2).

## Patentansprüche

1. Windenergieanlagenturm (1), welcher Stahlbeton (3) umfasst und in einem Gleitschalungsverfahren oder Gleitformverfahren hergestellt wird,
**dadurch gekennzeichnet, dass**
der Windenergieanlagenturm (1) Faserrovings (2, 8, 9, 10) umfasst, die während des Gleitschalungs- oder Gleitformverfahrens als Verstärkungen in den Beton (3) eingebettet werden, und dadurch, dass
die Faserrovings (2, 8, 9, 10) in dem Beton (3) bereits am Boden (5) des Windenergieanlagenturms (1) verankert sind, und ihre Enden an der Spitze (4) des Windenergieanlagenturms (1).

2. Windenergieanlagenturm nach Anspruch 1,
**dadurch gekennzeichnet, dass**
die Faserrovings (2, 8, 9, 10) Glasfaserrovings (2, 8, 9, 10), Aramidfaserrovings (2, 8, 9, 10) und/oder Kohlefaserrovings (2, 8, 9, 10) sind.

3. Windenergieanlagenturm nach Anspruch 1 oder 2,
**dadurch gekennzeichnet, dass**
die Faserrovings (2, 8, 9, 10) Bündel von mehreren parallel ausgerichteten Fasern sind.

4. Windenergieanlagenturm nach Anspruch 3,
**dadurch gekennzeichnet, dass**
- der Durchmesser der Kohlefasern im Bereich von 5 µm bis 10 µm liegt, und/oder
- die Anzahl der Kohlefasern im Roving zwischen 5000 und 30000 liegt, und/oder
- der Durchmesser der Glasfasern im Bereich von 10 µm bis 30 µm liegt, und/oder
- die Anzahl der Glasfasern im Roving zwischen 500 und 2000 liegt, und/oder
- das Gewicht des Faserrovings zwischen 0,20 und 30 kg/km beträgt.

5. Windenergieanlagenturm nach einem der vorhergehenden Ansprüche,
**dadurch gekennzeichnet, dass**
einige Faserrovings (2, 8, 9, 10) unter einem gegebenen Winkel (α) bezüglich der (vertikalen) Längsachse (A) des Turms (1) um den Windenergieanlagenturm (1) gewickelt sind, vorzugsweise unter einem Winkel von ± 25 Grad.

6. Windenergieanlagenturm nach einem der vorhergehenden Ansprüche,
**dadurch gekennzeichnet, dass**
einige Faserrovings (9) unter einem gegebenen Winkel (β) bezüglich der (vertikalen) Längsachse (A) des Turms (1) um den Windenergieanlagenturm (1) gewickelt sind, vorzugsweise unter einem Winkel (β) von ± 85 Grad, so dass sie im Wesentlichen dem Umfang des Turms (1) folgen.

7. Windenergieanlagenturm nach einem der vorhergehenden Ansprüche,
**dadurch gekennzeichnet, dass**
einige Faserrovings (10) in dem Beton (3) unter einem Winkel von null Grad bezüglich der Längsachse (A) des Turms (1) angeordnet sind.

8. Windenergieanlagenturm nach einem der vorhergehenden Ansprüche,
**dadurch gekennzeichnet, dass**
- an der Spitze (4) des Turms (1) der Turm sich entweder an eine Windnachführungskonstruktion oder an irgendein Übergangsteil zwischen dem Turm (1) und der Windnachführungskonstruktion anpasst, Faserrovings (2, 8, 9, 10) in Pfaden angeordnet sind, um den intensiven Spannungen und Beanspruchungen Rechnung zu tragen, welche auf diesen Teil des Turms (1) einwirken.

9. Windenergieanlagenturm nach einem der vorhergehenden Ansprüche,
**dadurch gekennzeichnet, dass**
die Faserrovings (2, 8, 9, 10) vorgespannt werden, wenn sie während des Gleitschalungsverfahrens in dem Beton (3) angebracht werden, um keine Falten an den Faserrovings (2, 8, 9, 10) zu erzeugen oder um den Turm (1) zu stabilisieren.

10. Windenergieanlagenturm nach einem der vorhergehenden Ansprüche,
**dadurch gekennzeichnet, dass**
die Faserrovings (2, 8, 9, 10) als eine Ergänzung zu einer herkömmlichen Eisenstabbewehrung (6) eingebettet sein können, oder die herkömmliche Eisenstabbewehrung (6) als eine Ergänzung zu den Faserrovings (2) eingebettet sein kann.

## Revendications

1. Tour d'éolienne (1) comprenant du béton armé (3) et produite par un procédé de formage en barbotine ou un procédé de moulage en barbotine,
**caractérisée en ce que**
la tour d'éolienne (1) comprend des mèches de fibres (2, 8, 9, 10) en tant qu'armatures intégrées dans le béton (3) pendant le procédé de formage en barbotine ou le procédé de moulage en barbotine, et **en ce que** les mèches de fibres (2, 8, 9, 10) sont ancrées dans le béton (3) déjà en bas (5) de la tour d'éolienne (1) et se terminent au sommet (4) de la tour d'éolienne (1).

2. Tour d'éolienne selon la revendication 1,
**caractérisée en ce que**
les mèches de fibres (2, 8, 9, 10) sont des mèches de fibres de verre (2, 8, 9, 10), des mèches de fibres d'aramide (2, 8, 9, 10), et/ou des mèches de fibres de carbone (2, 8, 9, 10).

3. Tour d'éolienne selon la revendication 1 ou 2, **caractérisée en ce que**
les mèches de fibres (2, 8, 9, 10) sont un faisceau de fibres multiples orientées parallèlement.

4. Tour d'éolienne selon la revendication 3,
**caractérisée en ce que**
- le diamètre des fibres de carbone se situe dans la plage de 5 µm à 10 µm, et/ou
- le nombre de fibres de carbone dans la mèche est compris entre 5 000 et 30 000, et/ou
- le diamètre des fibres de verre se situe dans la plage de 10 µm à 30 µm, et/ou
- le nombre de fibres de verre dans la mèche est compris entre 500 et 2 000, et/ou
- le poids de mèches de fibres est compris entre 0,20 et 30 kg/km.

5. Tour d'éolienne selon l'une quelconque des revendications précédentes,
**caractérisée en ce que**
certaines mèches de fibres (2, 8, 9, 10) sont enroulées autour de la tour d'éolienne (1) à un angle donné (α) par rapport à l'axe longitudinal (vertical) (A) de la tour (1), de préférence à un angle de ± 25 degrés.

6. Tour d'éolienne selon l'une quelconque des revendications précédentes,
**caractérisée en ce que**
certaines mèches de fibres (9) sont enroulées autour de la tour d'éolienne (1) à un angle donné (β) par rapport à l'axe longitudinal (vertical) (A) de la tour (1), de préférence à un angle (β) de ± 85 degrés de sorte qu'elles suivent sensiblement la circonférence de la tour (1).

7. Tour d'éolienne selon l'une quelconque des revendications précédentes,
**caractérisée en ce que**
certaines mèches de fibres (10) sont placées dans le béton (3) à un angle de zéro degré par rapport à l'axe longitudinal (A) de la tour (1).

8. Tour d'éolienne selon l'une quelconque des revendications précédentes,
**caractérisée en ce que**
au sommet (4) de la tour (1), la tour s'adapte soit à une construction en lacet, soit à une certaine pièce de transition entre la tour (1) et la construction en lacet, des mèches de fibres (2, 8, 9, 10) sont placées dans des chemins afin de faire face aux tensions et aux contraintes intensives qui agissent sur cette partie de la tour (1).

9. Tour d'éolienne selon l'une quelconque des revendications précédentes,
**caractérisée en ce que**
les mèches de fibres (2, 8, 9,10) sont précontraintes lorsqu'elles sont placées dans le béton (3) pendant le processus de moulage en barbotine afin de ne pas créer de plis sur les mèches de fibres (2, 8, 9, 10) ou pour stabiliser la tour (1).

10. Tour d'éolienne selon l'une quelconque des 10 revendications précédentes,
**caractérisée en ce que**
les mèches de fibres (2, 8, 9, 10) peuvent être intégrées en tant que supplément à une armature de barres de fer classique (6) ou l'armature de barres de fer classique (6) peut être intégrée en tant que supplément aux mèches de fibres (2).
